# EUROPEAN PATENT SPECIFICATION

(11) **EP 2 101 101 B1**
(45) Date of publication and mention of the grant of the patent: **22.06.2011**
(21) Application number: 09154674.7
(22) Date of filing: 09.03.2009
(51) Int. Cl.: F16L 55/26

(54) **In-pipe work robot**
Roboter für Arbeiten im Rohr
Robot de travail à l'intérieur de conduites

(30) Priority: 10.03.2008 JP 2008059236
(43) Date of publication of application: 16.09.2009
(73) Proprietor: Shonan Gosei-Jushi Seisakusho K.K., Kanagawa 254-0807 (JP)
(72) Inventor: Tsujisawa, Takahiko, Ashikaga-shi Tochigi 326-0845 (JP); Kamiyama, Takao, Hiratsuka-shi Kanagawa 254-0807 (JP); Ueno, Masao, Oyama-shi Tochigi 323-0065 (JP)
(74) Representative: Kronthaler, Wolfgang N.K.

(56) References cited:
- DE-A1- 19 703 315
- GB-A- 2 098 300
- US-A- 4 982 490

## Description

The present invention relates to an in-pipe work robot, and more specifically to an in-pipe work robot for performing pipe work inside a first pipe (sewer main pipe) intersecting with a second pipe (lateral pipe).

When a sewer pipe or another existing pipe buried underground has deteriorated, it is known that a pipe lining method is used to line the existing pipe using a pipe lining material in order to restore the existing pipe without digging up the pipe. The pipe lining material is comprised of a flexible tubular resin absorbing material impregnated with an uncured liquid setting resin (commonly a thermosetting resin). The resin absorbing material is made of a non-woven fabric having a pipe shape corresponding to the shape of the existing pipe. A highly airtight plastic film is coated on the external peripheral surface of the resin absorbing material.

In the lining work, the lining material is pulled into the existing pipe or everted and inserted into the existing pipe by means of fluid pressure. The inserted lining material is pressed against the internal peripheral surface of the existing pipe, and the liquid setting resin impregnated in the pipe lining material is heated and cured to line the internal surface of the existing pipe.

Commonly, a lateral pipe communicates with a sewer pipe or another main pipe. When the main pipe is lined with the pipe lining material, the pipe lining material blocks the opening at the end of the juncture of the lateral pipe. Therefore, an in-pipe work robot provided with a drill and a TV camera is transported into the main pipe and operated remotely from aboveground. The cutter (rotary blade) of the drill is rotatably driven from the main pipe to drill through and remove the portion of the pipe lining material that blocks the end of the lateral pipe (JP-A-2000-15509).

However, the cutter of the drill must be positioned in the pipe length direction, the peripheral direction and the vertical direction of the main pipe prior to drilling. This is accomplished while monitoring the main pipe interior with a TV camera. However, since the main pipe interior has poor visibility, being dark, there are cases in which mistakes are made in positioning; i.e., mistakes are made in the drilling positions.

As a countermeasure, a method is used in which a hole saw linked to a flexible shaft for transmitting the rotary power of a motor is inserted into the lateral pipe prior to drilling, and a tentative hole small in diameter is formed from the lateral pipe in the portion of the pipe lining material that blocks the opening of the lateral pipe. After the tentative hole is formed, the TV camera is inserted through the lateral pipe, and a hole is drilled from the main pipe while the lateral pipe interior is monitored.

However, in the method for forming a tentative hole from the lateral pipe, the hole saw is movably supported by the flexible shaft in the direction orthogonal to the pipe length direction of the lateral pipe. Therefore, it is difficult to position the hole saw in the lateral pipe in the desired drilling position (for example, the center position of the opening of the end of the lateral pipe or the like), and there are cases in which the drilling position deviates from the desired position.

There are also cases in which the hole saw slips and moves due to a reaction by rotation in the direction orthogonal to the pipe length direction of the lateral pipe, and the hole saw collides with the internal peripheral surface of the lateral pipe, particularly in cases in which the pipe lining material that blocks the end of the lateral pipe has a hard surface. In this case, problems occur such as the hole saw being damaged, or the pipe lining material being scratched in cases in which the lateral pipe is lined.

Another problem of the prior art is that a metal cutter or hole saw is used to cut the pipe lining material and form a hole in the pipe lining material from either the lateral pipe or the main pipe. This causes the peripheral portions of the lateral pipe to be unintentionally scratched.

US-Patent 4, 982, 490 (corresponding to the preamble of claim 1) discloses a method and an apparatus for lining a main fluid conduit having a branch conduit and an arrangement for positioning the rotational center of a water cutting jet to the center of the branch conduit using an annular inflatable locating device, having a steel ring. The locating device is inserted into the branch conduit, inflated and retained in the branch conduit. A rotatable detector is mounted at the rotational center of the water cutting jet and moved in the main conduit until it receives the strongest signal. When the detector receives the strongest signal, the water cutting jet is considered positioned at the center of the branch conduit, and is caused to rotate to form a bore in the main conduit.

In US-Patent 4, 982, 490, the locating device inserted into the branch pipe is considered complicated and difficult in its handling because it must be inflated and retained inside the branch conduit. Furthermore, the positioning arrangement disclosed in this solution using a metal detector and a metal ring signal source, is considered as quite complex.

It is therefore an object of the invention to provide an in-pipe work robot capable of reliably cutting a lining material to make an opening at that portion of the lining material which blocks the junction of the first and second pipes, having a simple construction and allowing an easy handling.

Another object of the present invention is to provide an in-pipe work robot capable of shattering or breaking up obstacles when the lining material is to be drilled through.

These objects are solved by an in-pipe robot according to the features of independent claim 1.

In the present invention, an in-pipe work robot for performing pipe work inside a first pipe intersecting with a second pipe comprises a cutting nozzle for spraying a pressurized fluid material or pressurized granular material onto an internal wall surface of the first pipe to cut a junction between the first pipe and the second pipe; a movement mechanism for moving the cutting nozzle inside the first pipe along a center axis thereof; a rotary mechanism for rotating the cutting nozzle about a vertical axis; and a roll mechanism for rolling the cutting nozzle within a plane perpendicular to the center axis of the first pipe.

According to characterising part of the invention, the robot comprises a magnet or a metal or magnetic substance mounted on the rotational center of the rotary mechanism;
the robot operates with a metal or magnetic substance disposed inside the second pipe in case of the magnet mounted on the rotational center of the rotary mechanism, or a magnet disposed inside the second pipe in case of the metal or magnetic substance mounted on the rotational center of the rotary mechanism;
whereby the magnet is able to attract the metal or magnetic substance; and
the magnet or metal or magnetic substance mounted on the rotary mechanism is movable to a predetermined position in the first pipe and hereby moving the metal or magnetic substance or the magnet inside the second pipe to the center thereof; and
in position of the metal or magnetic substance or the magnet in the center of the second pipe, the cutting nozzle is rotatable to cut the junction between the first and second pipes by the pressurized fluid or granular material sprayed from the cutting nozzle and to thereby form an opening for communicating the first pipe with the second pipe.

Further features of the invention, its nature and various advantages will be more apparent from the accompanying drawings and following detailed description of the invention.
FIG. 1 is a perspective view showing a schematic external view of an in-pipe work robot according to the present invention;
FIG. 2 is a front view showing a segment of part of the in-pipe work robot;
FIG. 3 is a top view showing the rotary mechanism of the in-pipe work robot;
FIG. 4 is a front view showing the in-pipe work robot as being set up in a main pipe;
FIG. 5a is a top view of a metal ball holder, and FIG. 5b is a side view of the same;
FIG. 6 is an illustrative view showing an image of the metal ball holder as viewed from the side facing the lateral pipe;
FIG. 7a is a top view of an XY robot, and FIG. 7b is a side view of the same;
FIG. 8 is a front view of an embodiment of an in-pipe work robot provide with an XY robot;
FIG. 9 is an illustrative view showing a system for controlling the position of the cutting nozzle;
FIG. 10 is an illustrative view showing how the shape of the cut outline is determined; and
FIG. 11 is a front view showing another embodiment of the present invention in which the XY robot is stood upright to shatter obstacles.

The present invention will now be described in detail based on the illustrated embodiments. The embodiments are described with reference to a case in which a sewer pipe or other main pipe is used as the first pipe, and a lateral pipe which branches from the main pipe to aboveground is used as the second pipe. However, the present invention is not limited to these embodiments alone and can be applied to a system for drilling a hole in an arrangement in which the first and second pipes intersect with each other, and an opening that communicates with the second pipe is formed at the intersection. An embodiment will be described in which the first pipe is lined with a pipe lining material, a hole is formed in the lined first pipe to provide an opening. However, the method can also be applied to a pipe that has not been lined. The present invention can also be applied to a case of forming a hole in that lining material portion of a main pipe that blocks the open end of a lateral pipe for both cases in which the lateral pipe is lined prior to lining the main pipe, and the main pipe is lined prior to lining the lateral pipe.

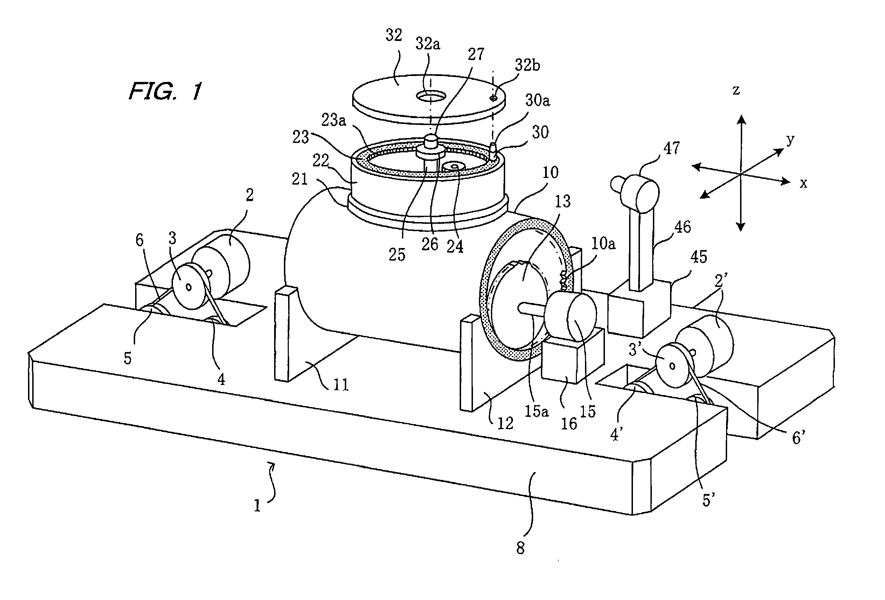

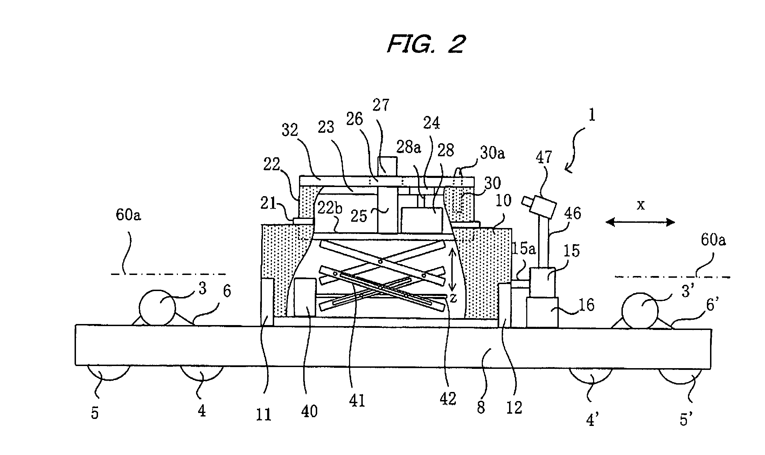

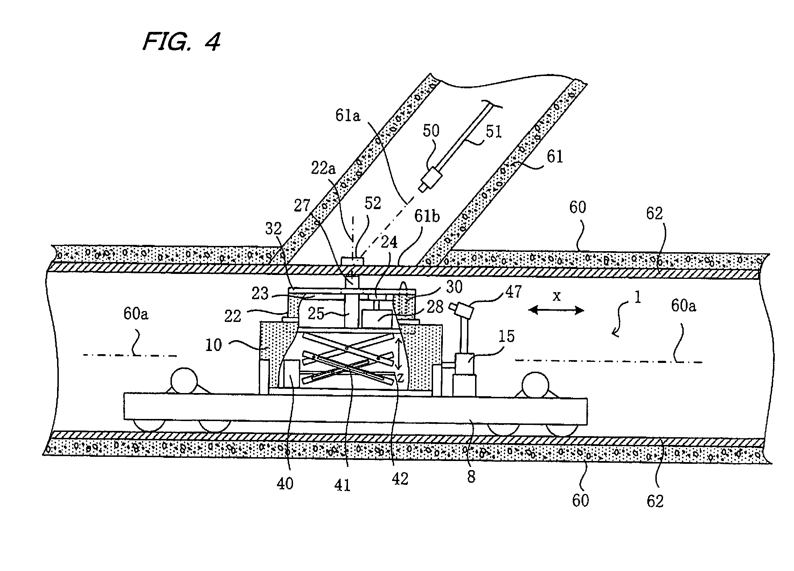

An in-pipe work robot 1 includes a carriage 8, which is provided at the front with wheels 4, 5 rotated by a motor 2 via a belt 6 and a pulley 3, as shown in FIGS. 1 and 2. Wheels 4', 5' rotated by a motor 2' via a belt 6' and a pulley 3' are similarly mounted at the rear of the carriage 8. The carriage 8 is moved in the x-axis direction by driving either one of the motors 2, 2' or by synchronously driving both of the motors 2, 2'. The in-pipe work robot 1 is set up inside a main pipe 60 that extends in x-axis direction, i.e., in the pipe length direction. The x-axis direction is also the direction along which lies a central axis 60a of the main pipe 60, as shown in FIG. 4.

A tubular roll cylinder 10 that constitutes a roll mechanism is mounted on top of the carriage 8 via bearing plates 11, 12 composed of ball bearings. An internal gear 10a is formed in the internal peripheral surface of the rear end of the cylinder 10. The internal gear 10a meshes with a gear 13 that is rotated about a motor shaft 15a by a motor 15 fixed to an attachment platform 16. When the motor 15 rotates, the meshing between the gear 13 and the internal gear 10a causes the cylinder 10 to roll about its own center axis. The in-pipe work robot 1 is configured so that when the robot is set up inside the main pipe 60, the roll axis of the cylinder 10 substantially coincides with the center axis 60a of the main pipe 60.

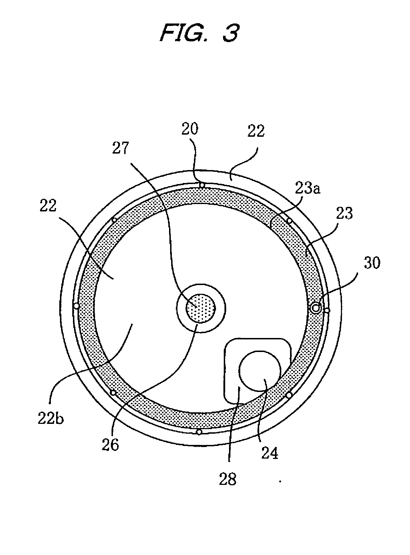

In the center at the top of the roll cylinder 10, a lifting cylinder 22 constituting a lifting mechanism is mounted via a guide ring 21 so as to rise and fall relative to the roll cylinder 10. The top of the lifting cylinder 22 is open. A rotary ring 23 constituting a rotary mechanism is supported via ball bearings 20 in the top of the lifting cylinder, and an internal gear 23a is formed in the internal peripheral surface of the rotary ring 23, as can be seen from FIG. 3. Fixed in the bottom part 22b of the lifting cylinder 22 is a motor 28 for rotating a gear 24 that is meshed with the internal gear 23a of the rotary ring 23. Rotation of the motor 28 causes torque to be transmitted via the gear 24 to the rotary ring 23, and the rotary ring 23 rotates about a center axis 22a (FIG. 4) of the lifting cylinder 22.

A cutting nozzle 30 extending in a perpendicular direction (the z-axis direction) is fixed to the rotary ring 23, and water, sand, or another pressurized fluid material or pressurized granular material is sprayed from the spray port 30a of the cutting nozzle 30 onto the internal wall surface of the main pipe 60, as will be described hereinafter.

A columnar support 25 is erected in the center of the bottom part 22b of the lifting cylinder 22, and a cylindrical magnet (permanent magnet or electromagnet) 27 is fixed via a disc 26 in the top of the columnar support 25. The lifting cylinder 22 is closed at the top by a cover 32 having openings 32a, 32b. In FIG. 1, the cover 32 is shown separated from the lifting cylinder 22 in order to depict the internal structure, but when the lifting cylinder 22 is closed by the cover 32, the disc 26 fixed to the columnar support 25 and the cutting nozzle 30 are inserted respectively through the openings 32a and 32b of the cover 32. Therefore, the magnet 27 and the spray port 30a of the cutting nozzle 30 can protrude from the surface of the cover 32, as shown in FIG. 2. The cover 32 is mounted to the rotary ring 23 so as to be capable of being rotated by the -motor 28 about the center axis 22a together with the rotary ring 23 and the cutting nozzle 30 mounted thereon.

As shown in FIG. 4, a lifting device 40 is provided at the bottom part of the roll cylinder 10 so that it can raise and lower a pantograph 41 via a rod 42 and the lifting cylinder 22 mounted on top of the pantograph 41 can rise and fall.

As shown in FIG. 1, a camera 47 is mounted at the rear of the carriage 8 via a columnar support 46 fixed to a support base 45, and the images photographed by the camera 47 can be viewed to observe the piping work inside the main pipe 60.

In the embodiment described above, power supply lines to the motors 2, 2', 15, 28, the lifting device 40, and other components, or lines for supplying fluid material or granular material to the cutting nozzle 30 would complicate the drawings and are therefore omitted.

The internal peripheral surface of the main pipe 60 is lined by a conventional method using a pipe lining material 62, as shown in FIG. 4. At this time, since the pipe lining material 62 blocks a main pipe-side opening 61b of a lateral pipe 61 that intersects the main pipe 60, a hole must be drilled through the pipe lining material 62 in this portion.

The in-pipe work robot 1 is used to form a hole in this type of pipe lining material 62 and to communicate the main pipe 60 with the lateral pipe 61. The operation of drilling a hole in the pipe lining material 62 is described in the following.

The in-pipe work robot 1 is conveyed into the main pipe 60 and is moved within the main pipe 60 in the x-axis direction along the center axis 60a of the main pipe 60 by the driving of the motors 2, 2'. A lamp (not shown) illuminates the interior of the lateral pipe 61 to make brighter the portion of the pipe lining material 62 that blocks the opening 61b of the lateral pipe 61. The carriage 8 is advanced to this portion, which is observed from aboveground or from within the manhole through the camera 47.

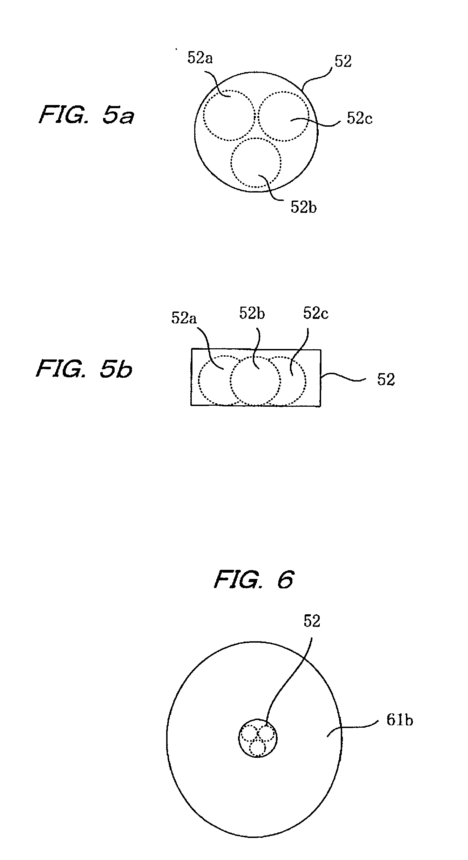

FIGS. 5a and 5b shows a metal ball holder (metal member) 52 for housing metal balls 52a, 52b, 52c. The metal ball holder 52 is inserted in advance into the lateral pipe 61, and rests by gravity on the pipe lining material 62. The metal ball holder 52, being attracted by the magnet 27 mounted on the lifting cylinder 22, moves on the pipe lining material 62 in the x-axis direction in accordance with the forward or reverse movement of the carriage 8. In order to ensure attraction by the magnet 27, the lifting device 40 is driven to raise the lifting cylinder 22 to a height where the magnet 27 will come in contact with the internal side of the pipe lining material 62.

When the motor 15 is driven, the roll cylinder 10 rolls about the center axis 60a of the main pipe 60, and the magnet 27 also rolls about the pipe center axis 60a within a plane (the yz plane) perpendicular to the center axis 60a. The metal ball holder 52 moves on the pipe lining material 62 in the y-axis direction in accordance with the rolling of the magnet 27.

Thus, the carriage 8 is moved forward and backward and the cylinder 10 is rolled in order to move the metal ball holder 52 on the pipe lining material 62 in the xy direction. The movement of the metal ball holder 52 can be observed from aboveground through a camera 50 mounted on a flexible shaft 51. FIG. 6 shows an image of the metal ball holder 52 positioned on the pipe lining material 62 in the portion of the opening 61b of the lateral pipe 61. The carriage 8 is moved forward and backward and the roll cylinder 10 is rolled until the metal ball holder 52 moves to the substantial center of the opening 61b.

When it has been visually confirmed that the metal ball holder 52 has moved to the substantially center position of the lateral pipe opening 61b as shown in FIG. 6, the movement of the carriage 8 and the rolling of the roll cylinder 10 are stopped. In this state, the center axis 22a of the lifting cylinder 22 intersects with the center axis 61a of the lateral pipe 61 in the center of the lateral pipe opening 61b, as shown in FIG. 4.

When the center of the opening to be formed by the cutting nozzle 30 is positioned so as to coincide with the pipe center axis 61a of the lateral pipe 61, water, sand, or another such pressurized fluid material or pressurized granular material is supplied to the cutting nozzle 30, and the motor 28 is actuated to rotate the rotary ring 23 as well as the cutting nozzle 30 mounted thereon at a peripheral velocity of, e.g., 4 mm/sec to 10 mm/sec. The fluid material or granular material sprayed from the spray port of the cutting nozzle 30 is blown onto the internal peripheral surface of the pipe lining material 62 (6.5 mm to 10 mm in thickness) of the main pipe 60 at a jet pressure of about 150 to 250 MPa and a jet diameter of 0.5 mm to 1.5 mm. This allows the pipe lining material 62 to be drilled through. When the rotary ring 23 makes one revolution, a circular hole is drilled into the pipe lining material 62 that has blocked the lateral pipe opening 61b, thus forming an opening which is substantially equivalent to the opening 61b of the lateral pipe 61.

The rotational speed (peripheral velocity) of the cutting nozzle is determined according to at least the jet pressure of the fluid material (or granular material), and the thickness and material of the pipe lining material to be drilled so that a circular hole can be drilled when the cutting nozzle makes one revolution.

In a case in which a granular material is sprayed, it is possible to use as the granular material garnet, a silicon-based material (silicon dioxide), or other sand material (grain size: 0.1 mm to 0.5 mm).

In the embodiment described above, the shape of the cut pipe lining material 62 is circular because the cutting nozzle 30 rotates about the center axis 22a. However, the shape of the open end 61b of the lateral pipe 61 could be elliptical depending on the manner in which the lateral pipe 61 is mounted to the main pipe 60, making it impossible to guarantee that a hole matching the shape of the open end 61b will be drilled.

In view of this, an embodiment is described in which an XY robot (XY table) is used to drill a hole having an arbitrary shape.

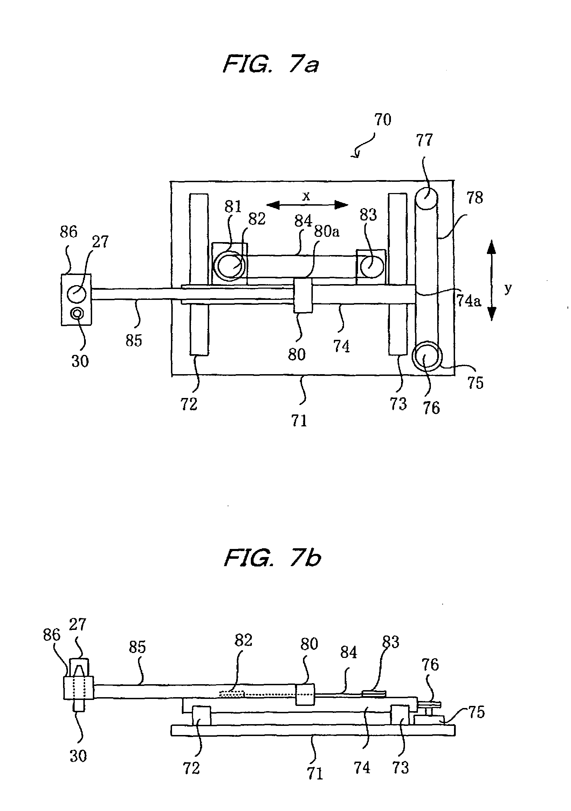

FIGS. 7a and 7b show the details of the configuration of an XY robot 70 used to drill a hole. Y-axis rails 72, 73 disposed in parallel are fixed to a base 71 of the XY robot 70, and an X-axis rail 74 is disposed so as to span the Y-axis rails 72, 73. One end 74a of the X-axis rail 74 is fixed to a belt 78 wrapped around a driven pulley 77 and a pulley 76 driven by a Y-axis motor 75. When the Y-axis motor 75 is driven, the X-axis rail 74 moves back and forth in the y-axis direction along the Y-axis rails 72, 73.

The X-axis rail 74 carries an X-axis head 80, an X-axis motor 81, a driven pulley 83 and a pulley 82 driven by the X-axis motor 81. One end 80a of the X-axis head 80 is fixed to a belt 84 wrapped around the pulleys 82, 83. When the X-axis motor 81 is driven, the X-axis head 80 is guided by the X-axis rail 74 to move back and forth in the x-axis direction.

An X-axis rod 85 is disposed on the X-axis rail 74 with one end fixed to the X-axis head 80. A magnet 27 and cutting nozzle 30 identical to those in FIG. 1 are mounted via an attachment platform 86 to the other end of the X-axis rod 85. When the X-axis motor 81 is driven, the X-axis head 80 moves in the x-axis direction, and the magnet 27 and cutting nozzle 30 therefore also move in the x-axis direction in accordance with this movement. When the Y-axis motor 75 is driven, the X-axis head 80 moves in the y-axis direction, and the magnet 27 and cutting nozzle 30 therefore also move in the y-axis direction. Thus, by actuating the X-axis motor 81 and the Y-axis motor 75, the magnet 27 and cutting nozzle 30 can be moved in the xy directions within a range that corresponds to the movement range of the X-axis head 80 in the xy directions.

The reason the cutting nozzle 30 is placed a predetermined distance apart from the Y-axis rail 72 on the XY robot 70 is to prevent the fluid material or granular material, cut scrap, or the like from falling onto the X-axis rail 74, the Y-axis rails 72, 73, the X-axis motor 81, the Y-axis motor 75, and other XY drive mechanisms of the XY robot, and the drive mechanisms thereof from being damaged, as will be described hereinafter.

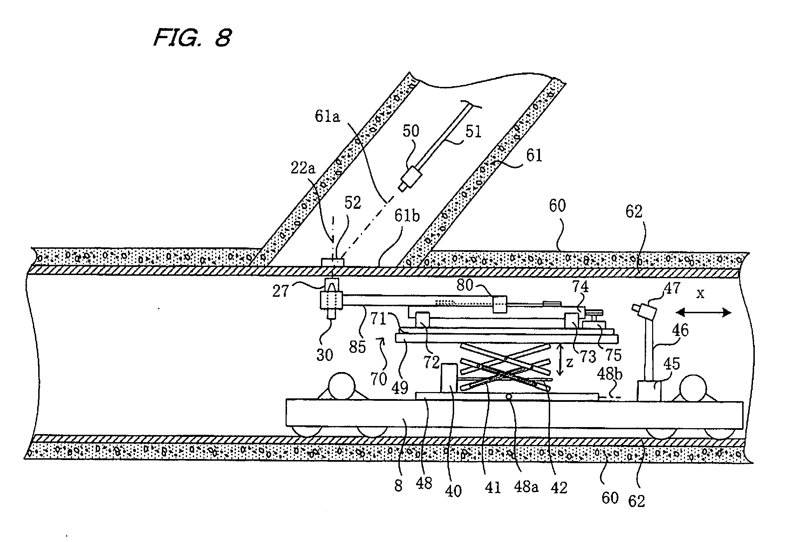

The XY robot 70 is mounted on the in-pipe work robot and moved inside the main pipe 60, as shown in FIG. 8. The XY robot 70 is installed on a mounting platform 49 so as to be capable of being raised and lowered in a perpendicular direction (z-axis direction) via the pantograph 41 by the lifting device 40 fixed to the carriage 8 via an attachment platform 48. The XY robot 70 is mounted so that the X-axis rail 74 is parallel to the x-axis direction, which is itself parallel to the center axis 60a of the main pipe 60; the Y-axis rails 72, 73 are parallel to the y-axis direction, which is itself perpendicular to the x- and z-axes; and the plane defined by the X-axis rail (x-axis) and Y-axis rails (y-axis) is a horizontal plane. The attachment platform 48 is rotated about the y-axis 48a or the x-axis 48b so as to keep the XY robot 70 horizontal. Alternatively, adjusters are provided at the four corners of the mounting platform 49 and the base 71, and the levelness is adjusted to keep the plane defined by the X-axis rail and Y-axis rails horizontal.

Next, the magnet 27 mounted on the XY robot 70 is moved in the x-axis and y-axis directions in the main pipe 60, and the movement of the metal ball holder 52 attracted by the magnet 27 is observed through the camera 50.

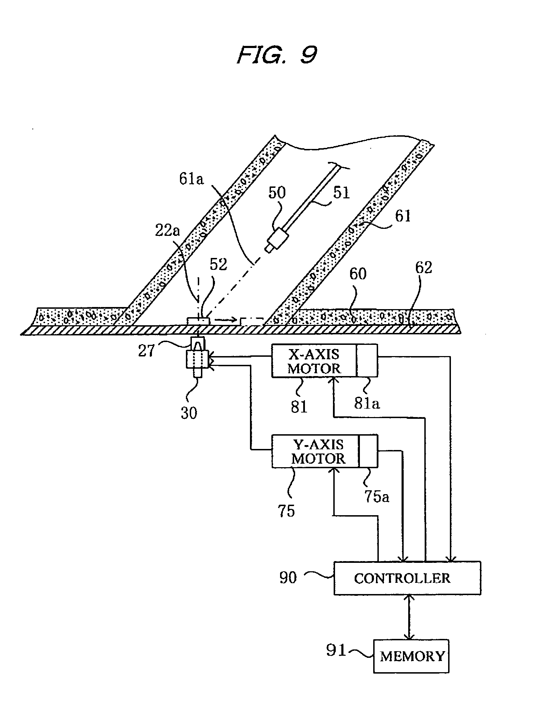

As shown in FIG. 9, a controller (control means) 90 drives the X-axis motor 81 and Y-axis motor 75 to move the X-axis head 80, the X-axis rod 85 and the magnet 27 fixed thereto in the x-axis and y-axis directions. Rotary encoders 81a, 75a are attached respectively to the X-axis motor 81 and Y-axis motor 75 to determine the x, y coordinates of the current position of the magnet 27, whose information is inputted from the rotary encoders 81a, 75a to the controller 90.

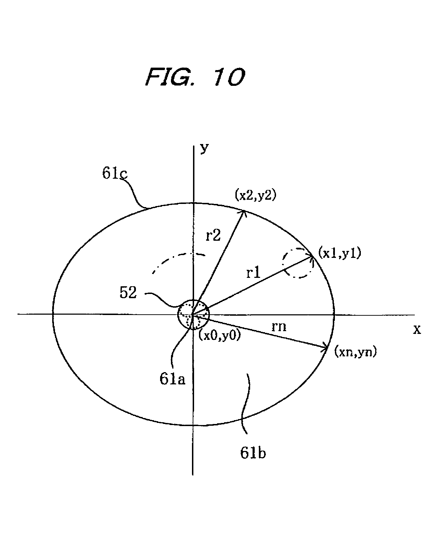

The magnet 27 is moved to a position where the center of the magnet 27 substantially coincides with the center axis 61a of the lateral pipe 61, and this position is used as an origin (x0, y0). The magnet 27 is moved in the r1 direction, for example, as shown in FIG. 10, and the movement of the metal ball holder 52, which moves in the r1 direction in accordance with the movement of the magnet 27, is observed through the camera 50. The metal ball holder 52 stops when the metal ball holder 52 reaches the lateral wall 61c of the lateral pipe 61. Therefore, driving of the X-axis motor 81 and Y-axis motor 75 stops when the ball holder 52 is observed to have stopped, and the position of the magnet 27 is calculated based on the position information from the rotary encoders 81a, 75a. The coordinates (x1, y1) of the positions where the metal ball holder 52 comes in contact with the lateral pipe lateral wall 61c can be calculated from the position of the magnet and the diameter d of the metal ball holder 52.

Thus, the magnet 27 is moved in various radial directions away from the pipe center axis 61a. The positional coordinates of the outline of the opening 61b of the lateral pipe 61 can be determined if the coordinates (xn, yn) (n = 1, 2, 3, ...) of the positions is given where the metal ball holder 52 comes in contact with the lateral wall 61c. Since the outline of the opening 61b is generally elliptical, the outline coordinates can be made more precise through elliptical interpolation when the contact positions are few in number.

The positional coordinates of the outline of the opening 61b of the lateral pipe 61 determined in this manner are stored in a memory 91. When the hole is actually drilled, the carriage 8 is moved in advance so that the cutting nozzle 30 is positioned substantially in the center of the opening 61b of the lateral pipe 61 while the X-axis head 80 is positioned in the substantial center of the XY robot 70, as shown in FIG. 8. The outline position coordinates of the opening 61b are then read from the memory 91, the X-axis motor 81 and Y-axis motor 75 are driven to move the cutting nozzle 30 to the read position, and the pressurized fluid material or pressurized granular material is sprayed from the cutting nozzle to cut the pipe lining material 62.

When the cutting nozzle 30 is moved sequentially to the coordinate positions stored in the memory 91 while the pressurized fluid material or pressurized granular material is sprayed from the cutting nozzle. The cutting nozzle 30 is moved along a pathway corresponding to the outline of the lateral pipe opening 61b. Given that the jet parameters of the cutting nozzle 30 (movement speed, jet pressure, jet diameter, and other parameters) are set to those as mentioned above, the pipe lining material 62 that blocks the lateral pipe opening 61b can be cut to form a hole corresponding to the opening 61b when the cutting nozzle 30 makes a full circle.

It is possible to prevent the fluid material or granular material, the cut scrap, or the like from falling onto the XY drive mechanism and damaging the drive mechanism, because the cutting nozzle 30 is mounted away from the drive mechanism of the XY robot 70, as described above.

With the configuration of the embodiment using the XY robot, it is possible to form not only holes having an elliptical shape such as is described above, but also holes having a circular, rectangular, or any arbitrary shape.

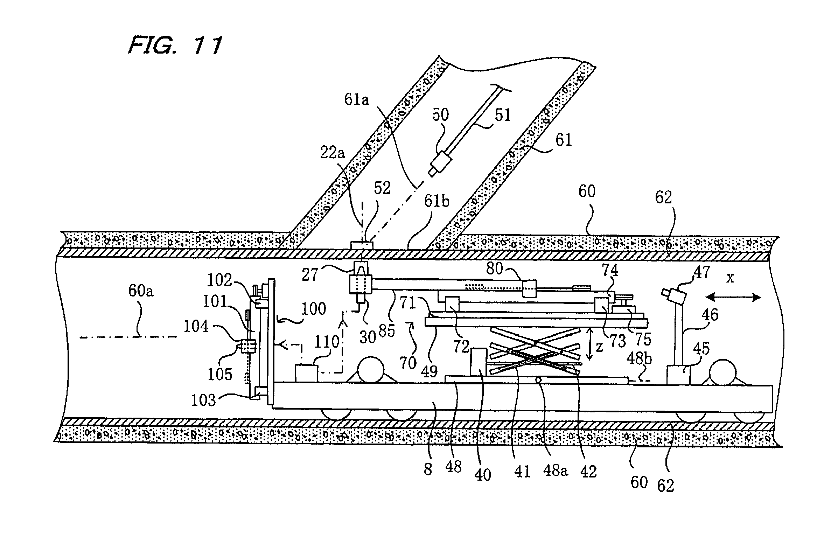

FIG. 11 shows another embodiment in which an XY robot 100 having the same configuration as the XY robot 70 described above is stood upright and mounted at the front of the carriage 8. The XY robot 100 has an X-axis rail 101 and Y-axis rails 102, 103, and an X-axis head 104 is mounted on the X-axis rail 101. A disposal nozzle 105 whose direction of spraying is pointed forward (in the direction running parallel to the center axis 60a of the main pipe 60) is attached to the X-axis head 104.

The disposal nozzle 105 sprays a pressurized fluid material or a pressurized granular material in the same manner as the cutting nozzle 30, and the disposal nozzle 105 is used to shatter or break up rock, wood, or other such obstacles (obstructions) in front of the in-pipe work robot when it moves forward.

When an obstacle is observed through a camera (not shown) set up in front, the disposal nozzle 105 is moved within a plane (yz plane) perpendicular to the pipe center axis 60a to a position where the disposal nozzle 105 faces the obstacle. The pressurized fluid material or pressurized granular material is then sprayed from the disposal nozzle 105 to shatter or break up the obstacle.

With this configuration, in-pipe obstacles can be reliably shattered and in-pipe work can be carried out efficiently.

A switching valve 110 is provided for supplying the pressurized fluid material or pressurized granular material between the cutting nozzle 30 and the disposal nozzle 105. The pressurized fluid material or pressurized granular material is supplied to the cutting nozzle 30 when the pipe lining material 62 is to be cut, and the pressurized fluid material or pressurized granular material is supplied to the disposal nozzle 105 when the obstacle in front is to be disposed of.

In the embodiments as described above, the metal ball holder 52 and/or the metal balls 52a, 52b, 52c housed therein is made of a metal such as iron, or steel and the like that can be attracted by the magnet 27, but the holder 27 and balls 52a, 52b, 52c can also be made of a magnetic substance such as iron oxide, chromium oxide, cobalt, ferrite and the like. The embodiments as described above can also be so modified that the holder 52 and the balls 52a, 52b, 52c therein is mounted on the columnar support 25 or the X-axis rod 85 of the XY robot 70, and the magnet 27 is moved on the pipe lining material 62 at the opening 61b of the lateral pipe 61.

## Claims

1. An in-pipe work robot for performing pipe work inside a first pipe (60) intersecting with a second pipe (61), the robot comprising:
a cutting nozzle (30) for spraying a pressurized fluid material or pressurized granular material onto an internal wall surface of the first pipe (60) to cut a junction between the first pipe (60) and the second pipe (61);
a movement mechanism (2, 2', 8) for moving the cutting nozzle (30) inside the first pipe (60) along a center axis (60a) thereof;
a rotary mechanism (23, 28) for rotating the cutting nozzle (30) about a vertical axis (22a);
a roll mechanism (10) for rolling the cutting nozzle (30) within a plane perpendicular to the center axis (60a) of the first pipe (60);
**characterized by** that
the robot comprises a magnet (27) or a metal or magnetic substance (52) mounted on the rotational center of the rotary mechanism (23, 28);
the robot operates with a metal or magnetic substance (52) disposed inside the second pipe (61) in case of the magnet (27) mounted on the rotational center of the rotary mechanism (23, 28), or a magnet (27) disposed inside the second pipe (61) in case of the metal or magnetic substance (52) mounted on the rotational center of the rotary mechanism (23, 28);
whereby the magnet (27) is able to attract the metal or magnetic substance (52); and
the magnet (27) or metal or magnetic substance (52) mounted on the rotary mechanism (23, 28) is movable to a predetermined position in the first pipe (60) and hereby moving the metal or magnetic substance (52) or the magnet (27) inside the second pipe (61) to the center thereof; and
in position of the metal or magnetic substance (52) or the magnet (27) in the center of the second pipe (61), the cutting nozzle (30) is rotatable to cut the junction between the first and second pipes (60, 61) by the pressurized fluid or granular material sprayed from the cutting nozzle (30) and to thereby form an opening (61b) for communicating the first pipe (60) with the second pipe (61).

2. An in-pipe work robot according to claim 1, wherein the cutting nozzle (30) is determined to cut a portion of a pipe lining material (62) by which the first pipe (60) is lined and that blocks the opening (61b) of the second pipe (61).

3. An in-pipe work robot according to claim 1 or 2, wherein the roll mechanism (10) is attached to the movement mechanism (2, 2', 8).

4. An in-pipe work robot according to one of claims 1 to 3, wherein the rotary mechanism (23, 28) is attached to the roll mechanism (10).

5. An in-pipe work robot according to one of claims 1 to 4, further comprising a lifting mechanism (22) for raising and lowering the cutting nozzle (30).

6. An in-pipe work robot according to claim 5, wherein the lifting mechanism (22) is attached to the roll mechanism (10).

7. An in-pipe work robot according to one of claims 1 to 6, wherein the rotational speed of the cutting nozzle (30) is determined according to at least the jet pressure of the fluid material or granular material, and the thickness and material of the portion to be drilled so that a circular hole can be drilled when the cutting nozzle (30) makes one revolution.

## Patentansprüche

1. Roboter für Arbeiten in einem Rohr zur Durchführung von Rohrarbeiten in einem ersten Rohr (60), das sich mit einem zweiten Rohr (61) schneidet, wobei der Roboter umfasst:
eine Schneiddüse (30) zum Sprühen eines unter Druck stehenden Fluidmaterials oder eines unter Druck stehenden granulären Materials auf eine Innenwandfläche des ersten Rohrs (60), um eine Verbindung zwischen dem ersten Rohr (60) und dem zweiten Rohr (61) auszuschneiden,
einen Bewegungsmechanismus (2, 2', 8) zum Bewegen der Schneiddüse (30) im Inneren des ersten Rohrs (60) entlang einer Mittelachse (60a) desselben,
einen Drehmechanismus (23, 28) zum Drehen der Schneiddüse (30) um eine vertikale Achse (22a),
einen Rollmechanismus (10) zum Rollen der Schneiddüse (30) innerhalb einer Ebene senkrecht zur Mittelachse (60a) des ersten Rohrs (60),
**dadurch gekennzeichnet, dass**
der Roboter einen Magneten (27) oder eine metallische oder magnetische Substanz (52) umfasst, der/die am Rotationsmittelpunkt des Drehmechanismus (23, 28) angebracht ist,
der Roboter im Falle des am Drehmittelpunkt des Drehmechanismus (23, 28) montierten Magneten (27) mit einer im Inneren des zweiten Rohrs (61) angeordneten, metallischen oder magnetischen Substanz (52) arbeitet, oder im Falle der am Drehmittelpunkt des Drehmechanismus (23, 28) angebrachten metallischen oder magnetischen Substanz (52) mit einem im Inneren des zweiten Rohrs (61) angeordneten Magneten (27) arbeitet,
wobei der Magnet (27) in der Lage ist, die metallische oder magnetische Substanz (52) anzuziehen, und
der Magnet (27) oder die metallische oder magnetische Substanz (52), der/die am Drehmechanismus (23, 28) montiert ist, an eine vorbestimmte Position im ersten Rohr (60) bewegbar ist und **dadurch** die metallische oder magnetische Substanz (52) oder den Magneten (27) im Inneren des zweiten Rohrs (61) zu dessen Mitte bewegt, und
an der Position der metallischen oder magnetischen Substanz (52) oder des Magneten (27) in der Mitte des zweiten Rohrs (61) die Schneiddüse (30) so drehbar ist, dass sie die Verbindung zwischen dem ersten und dem zweiten Rohr (60, 61) durch das unter Druck stehende, fluide oder granuläre Material schneidet, das aus der Schneiddüse (30) herausgesprüht wird, um **dadurch** eine Öffnung (61 b) zum Verbinden des ersten Rohrs (60) mit dem zweiten Rohr (61) zu bilden.

2. Roboter für Arbeiten im Rohr nach Anspruch 1, wobei die Schneiddüse (30) dazu bestimmt ist, einen Abschnitt aus einem Rohrauskleidungsmaterial (62) auszuschneiden, mit dem das erste Rohr (60) ausgekleidet und die Öffnung (61 b) des zweiten Rohrs (61) blockiert wird.

3. Roboter für Arbeiten im Rohr nach Anspruch 1 oder 2, wobei der Rollmechanismus (10) am Bewegungsmechanismus (2, 2', 8) angebracht ist.

4. Roboter für Arbeiten im Rohr nach einem der Ansprüche 1 bis 3, wobei der Drehmechanismus (23, 28) am Rollmechanismus (10) angebracht ist.

5. Roboter für Arbeiten im Rohr nach einem der Ansprüche 1 bis 4, ferner umfassend einen Hebemechanismus (22) zum Heben und Senken der Schneiddüse (30).

6. Roboter für Arbeiten im Rohr nach Anspruch 5, wobei der Hebemechanismus (22) am Rollmechanismus (10) angebracht ist.

7. Roboter für Arbeiten im Rohr nach einem der Ansprüche 1 bis 6, wobei die Drehgeschwindigkeit der Schneiddüse (30) zumindest abhängig vom Strahldruck des fluiden oder granulären Materials sowie von der Dicke und dem Material des Bohrabschnittes so bestimmt wird, dass durch eine Umdrehung der Schneiddüse (30) ein kreisförmiges Loch gebohrt werden kann.

## Revendications

1. Robot de travail à l'intérieur de conduites, destiné à effectuer des travaux dans une première conduite (60), qui se croise avec une deuxième conduite (61), ledit robot comprenant:
une buse de coupe (30) pour atomiser un matériau fluide pressurisé ou un matériau granulaire pressurisé sur une face interne de la paroi de la première conduite (60) afin de découper une jonction entre la première conduite (60) et la deuxième conduite (61),
un mécanisme de mouvement (2, 2', 8) pour mouvoir la buse de coupe (30) à l'intérieur de la première conduite (60) selon un axe centrale (60a) de cette dernière,
un mécanisme de rotation (23, 28) pour la rotation de la buse de coupe (30) autour d'un axe vertical (22a),
un mécanisme de roulement (10) pour rouler la buse de coupe (30) dans un plan perpendiculaire audit axe central (60a) de la première conduite (60),
**caractérisé en ce que**
ledit robot comprend un aimant (27) ou une substance métallique ou magnétique (52), qui est monté(e) au centre de rotation du mécanisme de rotation (23, 28),
dans le cas de l'aimant (27) monté au centre de rotation du mécanisme de rotation (23, 28), le robot travaille avec une substance métallique ou magnétique (52) disposée à l'intérieur de la deuxième conduite (61), ou travaille, dans le cas de la substance métallique ou magnétique (52) montée au centre de rotation du mécanisme de rotation (23, 28), avec un aimant (27) disposé à l'intérieur de la deuxième conduite (61),
l'aimant (27) étant apte à attirer ladite substance métallique ou magnétique (52), et
l'aimant (27) ou la substance métallique ou magnétique (52), monté(e) au mécanisme de rotation (23, 28) est déplaçable jusqu'à une position prédéterminée dans la première conduite (60), mouvant ainsi ladite substance métallique ou magnétique (52) ou ledit aimant (27) à l'intérieur de la deuxième conduite (61) vers le centre de cette dernière, et
dans la position de la substance métallique ou magnétique (52) ou de l'aimant (27) au centre de la deuxième conduite (61), la buse de coupe (30) peut être rotée de manière à découper la jonction entre les première et deuxième conduites (60, 61) au moyen du matériau fluide ou granulaire pressurisé, qui est atomisé à partir de la buse de coupe (30), de manière à former une ouverture (61 b) pour mettre la première conduite (60) en communication avec la deuxième conduite (61).

2. Robot de travail à l'intérieur de conduites selon la revendication 1, dans lequel la buse de coupe (30) est destinée à découper un tronçon d'un matériau de revêtement pour conduite (62), avec lequel la première conduite (60) est revêtue et qui bloque l'ouverture (61b) de la deuxième conduite (61).

3. Robot de travail à l'intérieur de conduites selon la revendication 1 ou 2, dans lequel le mécanisme de roulement (10) est attaché au mécanisme de mouvement (2, 2', 8).

4. Robot de travail à l'intérieur de conduites selon l'une quelconque des revendications 1 à 3, dans lequel le mécanisme de rotation (23, 28) est attaché au mécanisme de roulement (10).

5. Robot de travail à l'intérieur de conduites selon l'une quelconque des revendications 1 à 4, comprenant en outre un mécanisme de levage (22) pour lever et abaisser la buse de coupe (30).

6. Robot de travail à l'intérieur de conduites selon la revendication 5, dans lequel le mécanisme de levage (22) est attaché au mécanisme de roulement (10).

7. Robot de travail à l'intérieur de conduites selon l'une quelconque des revendications 1 à 6, dans lequel la vitesse de rotation de la buse de coupe (30) est déterminée selon au moins la pression du jet de matériau fluide ou granulaire ainsi que selon l'épaisseur et le matériau dudit tronçon à aléser de manière a permettre la réalisation d'un alésage circulaire lors d'une seule rotation de la buse de coupe (30).
